(19) Europäisches Patentamt
European Patent Office
Office européen des brevets

(11) **EP 3 002 107 B1**

(12) **EUROPEAN PATENT SPECIFICATION**

(45) Date of publication and mention
of the grant of the patent:
**06.05.2020  Bulletin 2020/19**

(51) Int Cl.:
***B29C 67/00*** *(2017.01)*    ***B33Y 10/00*** *(2015.01)*
***B33Y 30/00*** *(2015.01)*

(21) Application number: **15185075.7**

(22) Date of filing: **14.09.2015**

(54) **THREE-DIMENSIONAL OBJECT FORMING DEVICE AND THREE-DIMENSIONAL OBJECT FORMING METHOD**

HERSTELLUNGSVORRICHTUNG FÜR DREIDIMENSIONALES OBJEKTE UND
HERSTELLUNGSVERFAHREN FÜR DREIDIMENSIONALES OBJEKT

DISPOSITIF ET PROCÉDÉ DE FORMATION D'OBJET TRIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2014  JP 2014193653**

(43) Date of publication of application:
**06.04.2016  Bulletin 2016/14**

(73) Proprietor: **Mimaki Engineering Co., Ltd.
Tomi-shi,
Nagano 389-0512 (JP)**

(72) Inventor: **OHNISHI, Masaru
Tomi-shi, Nagano 389-0512 (JP)**

(74) Representative: **Bandpay & Greuter
30, rue Notre-Dame des Victoires
75002 Paris (FR)**

(56) References cited:
**WO-A2-2004/096527    WO-A2-2009/013751**

## Description

### TECHNICAL FIELD

The present disclosure relates to a three-dimensional object forming device and a three-dimensional object forming method.

### DESCRIPTION OF THE BACKGROUND ART

In recent years, development of a 3D printer that performs formation of a three-dimensional object in a three-dimensional form is in progress. Further, not only a monochrome three-dimensional object (formed object) is formed by the 3D printer, but also a technique that performs full-color decoration at the same time as the formation of the three-dimensional object is also in development. Further, as such a method, consideration is given to adapting the technique of a publicly known ink jet printer that color-prints a two-dimensional image (for example, see Internet URL http://www.mimaki.co.jp). Further, in this case, for example, an ink jet printer (UV printer) that uses ultraviolet curing ink (UV ink) is considered to be used.

### SUMMARY

Conventionally, for example, a 3D printer technique that forms a monochrome formed object and an ink jet printer technique that color-prints a two-dimensional image have been developed separately. Due to this, the configurations that are considered to be preferable for both these techniques at present do not necessarily match.

More specifically, in the conventional ink jet printer, when color-printing is to be performed, for example, a plurality of ink jet heads for each color of ink, namely of Y (yellow), M (magenta), C (cyan), and K (black), are used. Further, in this case, positions of the nozzles in the ink jet head of each color normally are aligned on a same line in a main scanning direction (Y direction) that is a direction along which the ink jet head is moved relative to positions of the nozzles of other ink jet heads upon a main scanning operation (scanning operation).

However, in a three-dimensional object forming device such as a 3D printer, if the configuration of the conventional ink jet printer is used as it is, and a plurality of ink jet heads having such a configuration are used as the ink jet heads for discharging the ink droplets of the forming ink, ink dots may be connected in the main scanning direction for example, and there is a risk that uneven streaks and the like become easily formed in the three-dimensional object that is being formed. More specifically, for example, in a case where the three-dimensional object is to be formed by using the plurality of ink jet heads having the above configuration and ultraviolet curing ink, the ink dots may be connected in the main scanning direction before ultraviolet irradiation, and such may result in being a cause of the uneven streaks and the like. Besides, WO 2009/013751 A2 discloses a system for solid freeform fabrication of an object, comprising a solid freeform apparatus having a plurality of dispensing heads, a building material supply apparatus configured to configured to supply a plurality of building materials to the fabrication apparatus and a control unit configured to to control the fabrication apparatus and the supply apparatus based on an operation mode selected from a plurality of predetermined operation modes.

Due to this, conventionally, a three-dimensional object forming device having a configuration more suitable for an operation of forming three-dimensional objects has been desired. Thus, the present disclosure provides a three-dimensional object forming device and a three-dimensional object forming method that can solve the above problem.

The inventor of the present application has conducted a keen study on a configuration that is more suitable for an operation of forming three-dimensional objects in connection to a three-dimensional object forming device such as a 3D printer. As a result, consideration has been given to causing a configuration to be different from the conventional arrangements of the ink jet heads as above and for example, using a configuration in which nozzles of different ink jet heads (or nozzle rows) do not align along the same line in the main scanning direction (Y direction). By configuring as above, for example, the generation of the uneven streaks and the like caused by the ink dots being connected in the main scanning direction can suitably be prevented. Further, by preventing the ink dots from being connected while being displaced in the main scanning direction, for example, ink layers can more suitably be flattened upon the formation of the three-dimensional object. That is, to solve the above problem, the present disclosure has the following configurations.

(Configuration 1 which is not part of the present invention) A three-dimensional object forming device that forms a three-dimensional object by an additive manufacturing method, the three-dimensional object forming device including: a head unit including a plurality of nozzle rows that discharge ink droplets in an ink jet scheme; and a main scanning drive unit that causes the head unit to perform a main scanning operation of discharging ink droplets while moving in a main scanning direction that is set in advance, wherein each of the plurality of nozzle rows is a row along which a plurality of nozzles are aligned in a nozzle row direction that intersects the main scanning direction, the plurality of nozzle rows are arranged along the main scanning direction so that at least some of their positions in a perpendicular direction that intersects perpendicularly with the main scanning direction overlap each other, and in the perpendicular direction, respective positions of the nozzles in each nozzle row differ from respective positions of the nozzles in other nozzle rows.

By configuring as above, for example, the positions of the nozzles in each of the plurality of nozzle rows do not come to be of a configuration of being aligned in a straight line along the main scanning direction. Due to this, for example, generation of uneven streaks and the like by adjacent ink dots in the main scanning direction being coupled can suitably be prevented. Further, by preventing the ink dots from being connected while being displaced in the main scanning direction, for example, ink layers can more suitably be flattened upon the formation of the three-dimensional object. Thus, by configuring as above, for example, the three-dimensional object forming device having the configuration more suitable for the operation of forming the three-dimensional object can be provided suitably.

It should be noted that the nozzle row direction may for example be a direction parallel to the perpendicular direction. In a case of forming a three-dimensional object, the plurality of nozzle rows discharge ink droplets for example of forming ink. Further, in this case, the plurality of nozzle rows preferably discharge the ink droplets for example of the same ink. The forming ink may for example be ink dedicated to formation. Further, as such a forming ink, ink of a predetermined color, such as white, clear and the like, may be used.

(Configuration 2 which is not part of the present invention) Each of the plurality of nozzle rows discharges ink droplets of ultraviolet curing ink that cures by ultraviolet irradiation. By configuring as above, for example, the three-dimensional object can suitably be formed by the additive manufacturing method. The three-dimensional object forming device preferably further includes an ultraviolet light source that delivers ultraviolet light.

(Configuration 3) N pieces of nozzle rows (N being an integer of 2 or more) are included as the plurality of nozzle rows, in each nozzle row, the plurality of nozzles are arranged so that intervals in the perpendicular direction become constant intervals p, and the plurality of nozzle rows are arranged along the main scanning direction so that an offset size of positions in the perpendicular direction between the adjacent nozzle rows becomes "p/N" for the position of the nozzle at an end in the arrangement of the nozzles in the nozzle row.

This configuration is a configuration in which a resolution in the perpendicular direction (X direction) becomes a resolution corresponding to the distance "p/N" when the nozzles of the plurality of nozzle rows are collectively seen, for example. By configuring as above, for example, the formation of the three-dimensional object can be performed suitably at higher resolutions corresponding to narrower distances than the interval of the nozzles (nozzle pitch) p in one nozzle row. Further, according to this, the formation of the three-dimensional object can be performed appropriately at higher accuracy.

(Configuration 4) In a case of forming the three-dimensional object, one ink layer is formed in a single main scanning operation by discharging the ink droplets from the plurality of nozzle rows. The formation of one ink layer in a single main scanning operation is, for example, to form one ink layer by a single pass (one pass). Further, the formation of one ink layer in one pass is, for example, to form at least an entire area of an island-like ink layer (layered island) by a single main scanning operation upon the formation of the three-dimensional object.

In a conventional ink jet printer, when two-dimensional images are to be printed, a configuration that performs printing by a multi-pass scheme is widely used. For example, in the case of using the ultraviolet curing ink, normally printing is performed by the multi-pass scheme. Further, for example, normally printing is performed by the multi-pass scheme in a case of performing printing by a higher resolution than the nozzle pitch in one nozzle row, or in a case where an influence of variation in discharge characteristics of nozzles needs to be suppressed.

Contrary to this, in the case of forming the three-dimensional object, for example, to perform the formation at fast speed, there may be cases where formation of the ink layers being the respective layers configuring the three-dimensional object in one pass is desirable instead of the multi-pass scheme. However, for example, in the case of using the plurality of ink jet heads of the conventional configuration, it becomes difficult to form one ink layer by one pass, so that there are cases where a fast-speed formation cannot be performed.

More specifically, for example, in a case of using a configuration in which the positions of the nozzles in each of the plurality of nozzle rows are aligned in a straight line along the main scanning direction, such as those widely used in the conventional ink jet printer, a dot interval in the perpendicular direction for the ink dots formed by one pass normally becomes much larger than a size (diameter) of one dot. Due to this, if such a configuration is used, one ink layer would be difficult to form by one pass.

Contrary to this, in configuring as in the Configuration 4, for example, since the positions of the nozzles of each of the plurality of nozzle rows are displaced in the perpendicular direction, one ink layer can be formed suitably by one pass. Due to this, by configuring as above, for example, the three-dimensional object can be formed faster.

(Configuration 5) In the single main scanning operation, the respective nozzles in the plurality of nozzle rows discharge the ink droplets to positions different from each other, and the ink droplets are discharged from the plurality of nozzle rows to all of the positions where the ink droplets should be discharged for forming the one ink layer at least within a certain area set in advance. By configuring as above, one ink layer can suitably be formed by one pass.

It should be noted that all of the positions where the ink droplets should be discharged is, for example, all of positions determined according to the resolution of the formation. Further, discharging the ink droplets by the plurality of nozzle rows to all of the positions is to discharge the ink droplets by the plurality of nozzle rows so that a concentration of discharge of the ink droplets in total becomes 100%, for example. Further, 100% concentration is, for example, a concentration in a case of discharging the ink droplets to all of the discharging positions aligned at the interval corresponding to the resolution of the formation.

Further, the certain area that has been set in advance is, for example, an area set according to a shape of the three-dimensional object to be formed. This area may for example be an area where an island-shaped ink layer (layered island) is to be formed.

(Configuration 6) In a case of forming the three-dimensional object, one ink layer is formed by discharging the ink droplets from the plurality of nozzle rows in each of plurality of main scanning operations. By configuring as above, for example, the ink layers can be formed suitably at high accuracy.

It should be noted that the formation of one ink layer in a plurality of main scanning operations is, for example, to form one ink layer by a multi-pass scheme. Further, in the case of forming the three-dimensional object, the multi-pass scheme is, for example, a scheme that discharges the ink droplets by a plurality of times of main scanning operations to all of the positions where the ink droplets should be discharged to form one ink layer.

(Configuration 7) The three-dimensional object forming device is configured operable also as a printing device for printing a two-dimensional image, and in a case of printing the two-dimensional image, each of the plurality of nozzle rows discharges ink droplets of colored ink of colors different from each other. By configuring as above, for example, the three-dimensional object forming device can be used suitably as a printing device as well in accordance with needs. Further, according to this, a device that can serve two functions, namely of the three-dimensional object forming device and the printing device, can suitably be provided.

It should be noted that in the case of causing the three-dimensional object forming device to operate as the printing device for printing the two-dimensional image, for example, it is preferable to switch the ink used in the plurality of nozzle rows. For example, in the case of the use as the printing device, the ink droplets of the ink of respective colors, namely of Y (yellow), M (magenta), C (cyan), and K (black), may be discharged from each of the plurality of nozzle rows. In this case, for example, the ink to be used in the plurality of nozzle rows may be switched from forming ink to the respective YMCK colored ink before the use as the printing device.

(Configuration 8) In the case of printing the two-dimensional image, printing is performed by the multi-pass scheme using the plurality of nozzle rows. By configuring as above, for example, highly accurate printing can be performed more appropriately in the event of performing the operation as the printing device.

(Configuration 9 which is not part of the present invention) A three-dimensional object forming method that forms a three-dimensional object by an additive manufacturing method, the three-dimensional object forming method including: causing a head unit including a plurality of nozzle rows that discharge ink droplets in an ink jet scheme to perform a main scanning operation of discharging ink droplets while moving in a main scanning direction that is set in advance, wherein each of the plurality of nozzle rows is a row along which the plurality of nozzles are aligned in a nozzle row direction that intersects the main scanning direction, the plurality of nozzle rows are arranged along the main scanning direction so that at least some of their positions in a perpendicular direction that intersects perpendicularly with the main scanning direction overlap each other, and in the perpendicular direction, respective positions of the nozzles in each nozzle row differ from respective positions of the nozzles in other nozzle rows. By configuring as above, for example, advantages similar to those of Configuration 1 can be obtained.

According to the present disclosure, the three-dimensional object forming device having the configuration more suitable for the operation of forming the three-dimensional object can for example be provided suitably.

BRIEF DESCRIPTION OF THE DRAWINGS

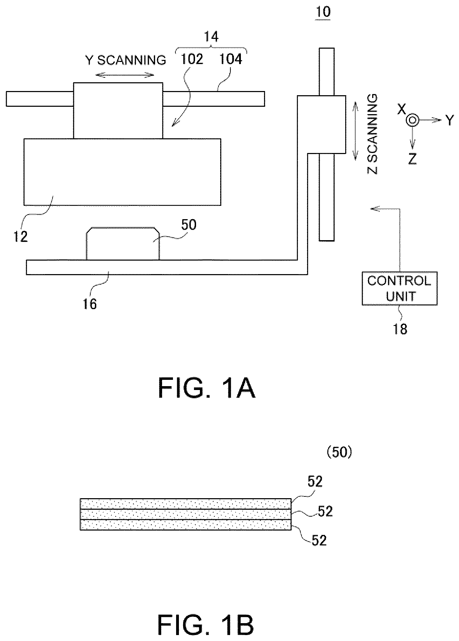

FIGS. 1A and 1B are diagrams showing an example of a three-dimensional object forming device 10 according to an embodiment of the present disclosure. FIG. 1A shows an example of a configuration of a primary part of the three-dimensional object forming device 10. FIG. 1B shows an example of a three-dimensional object 50 formed by the three-dimensional object forming device 10.

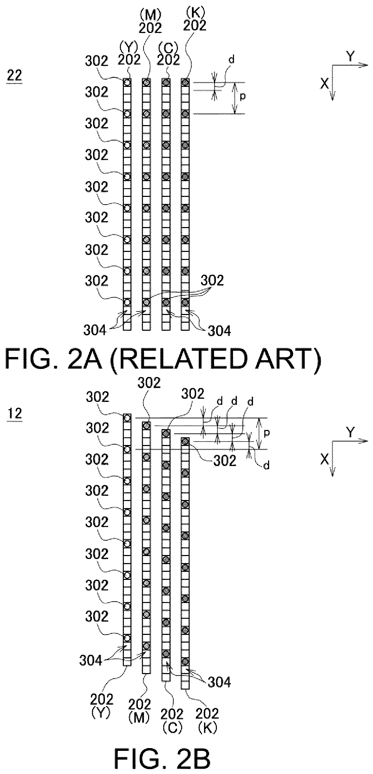

FIGS. 2A and 2B are diagrams explaining an example of a configuration of a head unit 12 compared to a conventional configuration. FIG. 2A shows an example of a configuration of a conventional head unit 22. FIG. 2B shows an example of a configuration of the head unit 12 in the present embodiment.

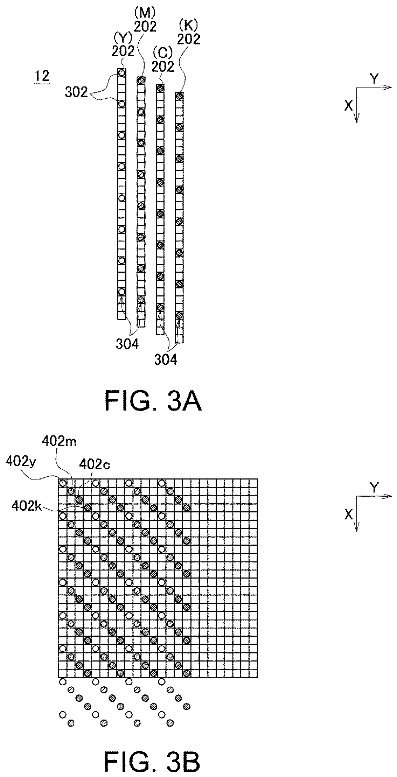

FIGS. 3A and 3B are diagrams explaining an operation to print a two-dimensional image using the head unit 12 of the present embodiment. FIG. 3A shows an example of a configuration of the head unit 12. FIG. 3B is an enlarged diagram showing an example of positions where ink droplets are to be discharged in each main scanning operation by nozzle rows of respective ink jet heads 202.

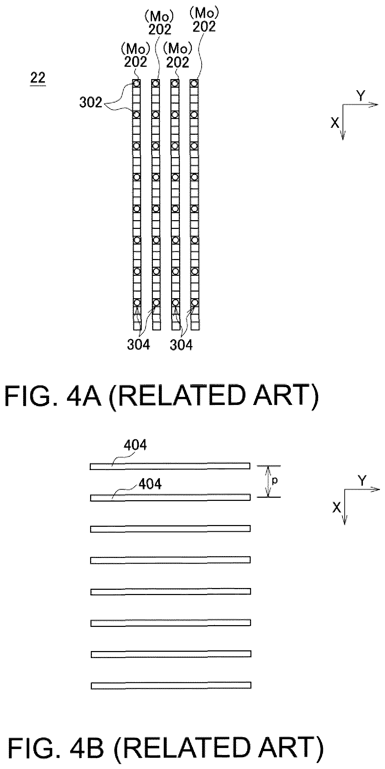

FIGS. 4A and 4B are diagrams showing an example of an operation to form a three-dimensional object using the conventional head unit 22. FIG. 4A shows an example of a configuration of the head unit 22. FIG. 4B shows an example of a state after one main scanning operation has been performed using the conventional head unit 22.

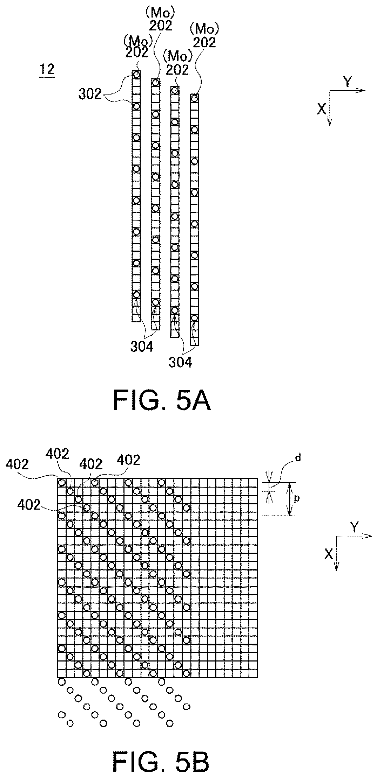

FIGS. 5A and 5B are diagrams showing an example of an operation to form a three-dimensional object using the head unit 12 of the present embodiment. FIG. 5A shows an example of a configuration of the head unit 12. FIG. 5B shows an example of a state after one main scanning operation has been performed using the head unit 12.

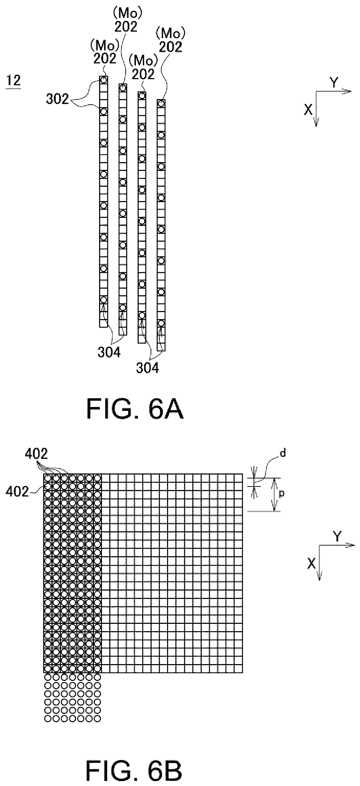

FIGS. 6A and 6B are diagrams showing another example of the operation to form a three-dimensional object using the head unit 12 of the present embodiment. FIG. 6A shows an example of the configuration of the head unit 12. FIG. 6B shows an example of the state after one main scanning operation has been performed using the head unit 12.

DETAILED DESCRIPTION OF EMBODIMENTS

Hereinbelow, embodiments according to the present disclosure will be described with reference to the drawings. FIGS. 1A and 1B are diagrams showing an example of a three-dimensional object forming device 10 according to an embodiment of the present disclosure. FIG. 1A shows an example of a configuration of a primary part of the three-dimensional object forming device 10. FIG. 1B shows an example of a three-dimensional object 50 formed by the three-dimensional object forming device 10, and shows a state of the three-dimensional object 50 during the formation in a simplified manner.

In the present embodiment, the three-dimensional object forming device 10 is a device for forming the three-dimensional object 50 using an additive manufacturing method. The additive manufacturing method in this case refers to a method for forming the three-dimensional object 50 for example by laminating a plurality of layers. The three-dimensional object 50 refers for example to a three-dimensionally structured object. Further, in the present embodiment, a method for forming a three-dimensional object may for example be regarded as a manufacturing method for a three-dimensional object.

It should be noted that aside from the matters explained hereinbelow, the three-dimensional object forming device 10 may include identical or similar configuration as a publicly-known three-dimensional object forming device. Further, the three-dimensional object forming device 10 may for example be a device in which a part of a configuration of a publicly-known ink jet printer is changed. For example, the three-dimensional object forming device 10 may be a device in which a part of an ink jet printer for two-dimensional image printing using ultraviolet curing ink (UV ink) is changed. Further, in the present embodiment, the three-dimensional object forming device 10 may for example operate also as an ink jet printer being a printing device for printing a two-dimensional image. In this case, for example, the three-dimensional object forming device 10 prints a color image, by replacing ink to be used.

In the present embodiment, the three-dimensional object forming device 10 includes a head unit 12, a main scanning drive unit 14, a formation table 16, and a control unit 18. The head unit 12 is a section that discharges droplets (ink droplets) to be a material of the three-dimensional object 50, and it discharges curing resin ink droplets and the like, being resin that cures according to a predetermined condition, and causes the same to cure. Further, according to this, the head unit 12 forms respective layers that configure the three-dimensional object 50.

More specifically, in the present embodiment, the head unit 12 for example includes a plurality of ink jet heads, and discharges the ink droplets according to instructions from the control unit 18. Further, as the curing resin, for example, ultraviolet curing resin that cures by ultraviolet irradiation is used. In this case, the head unit 12 discharges the ink droplets of the ultraviolet curing ink for example, as the ink droplets to be the material of the three-dimensional object 50. Further, ink layers are cured by ultraviolet irradiation by an ultraviolet light source. Further, as shown in FIG. 1B, in the present embodiment, the head unit 12 forms the three-dimensional object 50 by forming a plurality of ink layers 52 in a laminated manner upon forming the three-dimensional object 50.

It should be noted that in the present embodiment, ink refers for example to liquid discharged from an ink jet head. Further, the ink jet head refers for example to a liquid discharging head that discharges liquid using an ink jet scheme. The ink jet scheme refers for example to a scheme by which liquid droplets are discharged from nozzles by driving elements such as piezoelectric elements. Further, more specific configuration and operation of the head unit 12 will be described in further detail later.

The main scanning drive unit 14 is a driving section that causes the head unit 12 to perform a main scanning operation. In this case, causing the head unit 12 to perform the main scanning operation is, for example, to cause ink jet heads provided in the head unit 12 to perform the main scanning operation. Further, the main scanning operation is, for example, an operation that discharges the ink droplets while moving in a main scanning direction (Y direction in the drawings) that is set in advance.

Further, in the present embodiment, the main scanning drive unit 14 includes a carriage 102 and a guide rail 104. The carriage 102 is a retaining section that retains the respective ink jet heads and the like in the head unit 12 by causing them to face the formation table 16. In this case, retaining by causing them to face the formation table 16 is, for example, to retain the ink jet heads so that a discharging direction of the ink droplets becomes a direction directed toward the formation table 16. Further, upon the main scanning operation, the carriage 102 moves along the guide rail 104 in a state of retaining the respective ink jet heads. The guide rail 104 is a rail-shaped member that guides the movement of the carriage 102, and causes the carriage 102 to move according to instructions of the control unit 18 upon the main scanning operation.

It should be noted that the movement of the head unit 12 in the main scanning operation may be a relative movement relative to a three-dimensional object 50. Due to this, in a modification of the three-dimensional object forming device 10, for example, a position of the head unit 12 may be fixed, and the three-dimensional object 50 side may be moved for example by moving the formation table 16.

The formation table 16 is a table for mounting the three-dimensional object 50 under the forming process on a top surface thereof. In the present embodiment, the formation table 16 has a function to move its top surface in an up and down direction (Z direction in the drawings), and it moves its top surface according to instructions of the control unit 18 and in accordance with progress of the formation of the three-dimensional object 50. Further, according to this, a distance (gap) between a formed surface in the three-dimensional object 50 under formation and the head unit 12 is suitably adjusted. In this case, the formed surface of the three-dimensional object 50 is, for example, a surface on which a subsequent layer is to be formed by the head unit 12. Further, a scan in the Z direction (Z scanning) of moving the formation table 16 up and down relative to the head unit 12 may for example be performed by moving the head unit 12 side.

The control unit 18 is for example a CPU of the three-dimensional object forming device 10, and controls the operation of the formation of the three-dimensional object 50 by controlling the respective sections of the three-dimensional object forming device 10 based on data indicating the three-dimensional object 50 to be formed (formation data). According to this embodiment, the three-dimensional object 50 can suitably be formed.

It should be noted that other than the configuration shown in FIG. 1A, the three-dimensional object forming device 10 may for example further include respective configurations that would be necessary for the formation and the like of the three-dimensional object 50. For example, the three-dimensional object forming device 10 may further include a sub scanning drive unit that causes the head unit 12 to perform a sub scanning operation. In this case, the sub scanning operation is, for example, an operation that moves the ink jet heads in the head unit 12 in a sub scanning direction (X direction in the drawings) that intersects perpendicularly with the main scanning direction relative to the three-dimensional object 50 under formation. Further, in the present embodiment, the sub scanning direction is an example of a perpendicular direction that intersects perpendicularly with the main scanning direction. The sub scanning drive unit for example causes the head unit 12 to perform the sub scanning operation if needed, for example in a case where a three-dimensional object 50 of which length in the sub scanning direction is longer than a formation width of the ink jet heads in the head unit 12 is to be formed. Further, more specifically, the sub scanning drive unit may for example be a driving section that moves the formation table 16 in the sub scanning direction. Further, the sub scanning drive unit may for example be a driving section that moves the guide rail 104 together with the carriage 102 that retains the head unit 12.

Next, the configuration of the head unit 12 in the present embodiment will be described in further detail. As described above, in the present embodiment, the three-dimensional object forming device 10 operates also as the ink jet printer that prints two-dimensional images. Further, in this case, the three-dimensional object forming device 10 prints colored images, for example. Thus, first of all, an example of the configuration of the head unit 12 will be described in connection to a case of performing an operation as the ink jet printer.

FIGS. 2A and 2B are diagrams explaining an example of a configuration of the head unit 12 compared to the head unit 22, which is a head unit of a conventional configuration. FIG. 2A shows an example of a configuration of the conventional head unit 22. FIG. 2B shows an example of a configuration of the head unit 12 in the present embodiment. The head unit 22 and the head unit 12 both include a plurality of ink jet heads 202. Further, in a case of performing the operation as an ink jet printer, each of the plurality of ink jet heads 202 discharges ink droplets of coloring ink that differs from each other. In this case, the coloring ink that differs from each other is, for example, respective colors that are used as process colors in color printing. More specifically, in the shown cases, both the head unit 22 and the head unit 12 include the plurality of ink jet heads 202 that discharge the ink droplets of the ink of respective colors, namely of Y (yellow), M (magenta), C (cyan), and K (black). Further, each of the head unit 22 and the head unit 12 may further include ink jet heads that discharge ink droplets of other colors.

Further, as described above, in the present embodiment, the three-dimensional object forming device 10 forms three-dimensional objects using the ultraviolet curing ink. Further, in this case, even upon the operation as the ink jet printer, it is preferable to use the ultraviolet curing ink. Due to this, in the present embodiment, the plurality of ink jet heads 202 discharge for example ink droplets of the ultraviolet curing ink.

Further, although not shown, the head unit 22 and the head unit 12 for example further includes an ultraviolet light source that delivers ultraviolet light. As the ultraviolet light source, for example, UV LED may suitably be used. The ultraviolet light source is arranged for example at least on one side in the main scanning direction (Y direction) relative to the plurality of ink jet heads 202. Further, the ultraviolet light sources are preferably arranged on both the one side and the other side in the main scanning direction relative to the plurality of ink jet heads 202. Further, as the ultraviolet light source, for example, ultraviolet lamp, metal halide lamp, or the like may be used.

Further, in the shown configuration, the conventional head unit 22 and the head unit 12 of the present embodiment include the plurality of ink jet heads 202 having the same configuration. More specifically, each set of the ink jet heads 202 used in the head unit 22 and the head unit 12 for example includes nozzle rows 304 in which a plurality of nozzles 302 align in a nozzle row direction at a nozzle pitch "p" that is set to a predetermined constant interval. Further, in the head unit 22 and the head unit 12 that are shown, the nozzle row direction is a direction that is parallel to the sub scanning direction (X direction). According to this, the head unit 22 and the head unit 12 are configured to include a plurality of the nozzle rows 304 that discharge the ink droplets in the ink jet scheme. Further, in the case of printing the two-dimensional images, each of the plurality of nozzle rows 304 discharges the ink droplets of the colored ink that differs from each other.

It should be noted that for the convenience of depiction, a number of nozzles 302 aligning in the sub scanning direction in each ink jet head 202 is less than that in a general ink jet head. Further, as a result, a length of the ink jet heads 202 in the sub scanning direction is shortened. However, in the actual configuration, the number of the nozzles 302 may be greater according to accuracies and specification of printing and formation. Further, a length of the ink jet heads 202 in the sub scanning direction may accordingly be elongated by a corresponding amount. Further, as the ink jet heads 202, publicly known ink jet heads 202 may suitably be used. Further, as for the nozzle row direction along which the nozzles 302 align in the nozzle rows 304, it may be a direction other than the direction parallel to the sub scanning direction. For example, the nozzle row direction may be a direction that intersects with the main scanning direction at an angle other than the right angle.

On the other hand, as can be understood from the drawings, an arrangement of the plurality of ink jet heads 202 differs between the conventional head unit 22 and the head unit 12 of the present embodiment. For example, in the conventional head unit 22, the plurality of ink jet heads 202 are arranged as shown in the drawings by having their positions in the sub scanning direction aligned, in the main scanning direction. Further, in this case, each nozzle 302 in each nozzle row 304 comes to be in a state where its position in the sub scanning direction is aligned with the corresponding nozzles 302 in other nozzle rows 304. Further, according to this, each nozzle 302 in each nozzle row 304 aligns in a straight line in the main scanning direction with the corresponding nozzles 302 in other nozzle rows 304.

Here, the conventional head unit 22 has the configuration of a head unit that was used for example in a publicly known ink jet printer. Further, in such an ink jet printer, when two-dimensional images are to be printed, a configuration that performs printing by the multi-pass scheme is widely used. For example, in the case of using the ultraviolet curing ink, normally the printing is performed by the multi-pass scheme. Further, for example, normally the printing is performed by the multi-pass scheme in a case of performing printing by a higher resolution than the nozzle pitch "p" in one nozzle row, or in a case where an influence of variation in discharge characteristics of nozzles needs to be suppressed. In this case, the multi-pass scheme, for example, is a scheme that performs a plurality of times of main scanning operations on each region in a print target.

More specifically, in the case of performing printing by the multi-pass scheme, for example, the resolution of the printing in the sub scanning direction is set to a resolution that complies with a distance "d", which is smaller than the nozzle pitch "p" of the nozzle rows 304. More specifically, in the case shown in the drawings, the distance "d" complying with the print resolution becomes 1/4 of the nozzle pitch "p", for example. Further, in this case, printing at the high resolution corresponding to the distance "d" being smaller than the nozzle pitch "p" is performed by performing the printing in the multi-pass scheme that sets a pass number to 4 or more at the least. Further, yet more specifically, in the case shown in the drawings, the distance "d" is for example a distance corresponding to a resolution of 600 dpi. Further, the nozzle pitch "p" is a distance corresponding to a resolution of 150 dpi.

Further, to consider suppressing the influence of variation in discharge characteristics of the nozzles, the pass number of the printing is preferably made even larger. For example, a publicly known ink jet printer that uses the ultraviolet curing ink performs printing at the pass number of about 8 to 32 (for example, 8, 16, 32, etc.).

Accordingly, the conventional ink jet printer normally has a configuration on the premise of performing printing in the multi-pass scheme. Due to this, normally, it is difficult to perform printing with the pass number of 1 (one pass). In the least, in the case where the distance "d" in the sub scanning direction corresponding to the resolution is smaller than the nozzle pitch "p", the one-pass printing is structurally impossible. Further, as a result, the one-pass printing becomes difficult even in the case of using the conventional head unit 22 in a three-dimensional object forming device such as a 3D printer. In this case, a one-pass operation by the three-dimensional object forming device is an operation that forms the respective ink layers 52 configuring the three-dimensional object 50 (see FIGS. 1A and 1B) by a single main scanning operation. It should be noted that the operation as the three-dimensional object forming device will be described in further detail later.

Contrary to this, in the head unit 12 of the present embodiment, as shown for example in FIG. 2B, the plurality of ink jet heads 202 are arranged along the main scanning direction while having their positions in the sub scanning direction offset from those of the other ink jet heads 202. According to this, the plurality of nozzle rows 304 in the head unit 12 are arranged along the main scanning direction such that their positions at some parts overlap each other in the sub scanning direction.

Further, in this case, a distance by which the positions of the respective ink jet heads 202 are to be offset in the sub scanning direction is set to a distance smaller than the nozzle pitch "p". According to this, in the sub scanning direction, the positions of the nozzles 302 in each nozzle row 304 come to be different from the positions of each nozzle 302 in other nozzle rows 304.

More specifically, the distance by which the positions of the respective ink jet heads 202 are to be offset in the sub scanning direction is set to a distance obtained by dividing the nozzle pitch "p" by an integer (distance that is a fraction of the nozzle pitch with the integer as the denominator). For example, in the shown case, the distance by which the ink jet heads 202 are offset is set to 1/4 of the nozzle pitch "p". Further, this distance is equal to the distance "d" in the sub scanning direction corresponding to the resolution.

Further, in a case of indicating the configuration of the head unit 12 of the present embodiment in a more generalized manner, it may be considered to be of a configuration in which the number of the nozzle rows 304 provided in the head unit 12 is assumed to be N pieces (N being an integer of 2 or more), and the plurality of nozzle rows 304 are arranged adjacently along the main scanning direction such that the positions of the nozzles 302 at one ends have an offset size for the positions in the sub scanning direction among the adjacent nozzle rows 304 of "p/N". In this case, the nozzles 302 at the one ends mean the nozzles 302 at the ends in the arrangements of the nozzles 302 in the respective nozzle rows 304.

Also in a case of using the head unit 12 having such a configuration, color images can suitably be printed in the case for example of operating as an ink jet printer for printing two-dimensional images. Further, in the case of performing the operation to form the three-dimensional object 50, for example, as compared to the case of using the conventional head unit 22, the forming operation can more suitably be performed. Thus, hereinbelow, such operations will be described in further detail.

Firstly, the operation as the ink jet printer for printing two-dimensional images will be described in further detail. FIGS. 3A and 3B are diagrams explaining an operation to print a two-dimensional image using the head unit 12 of the present embodiment. FIG. 3A shows an example of the configuration of the head unit 12, and shows the configuration of the head unit 12 described using FIG. 2B. FIG. 3B is an enlarged diagram showing an example of positions to discharge ink droplets in each main scanning operation by nozzle rows of respective ink jet heads 202. In FIG. 3B, each box indicates a discharging position, which is a position where an ink droplet should be discharged. Further, the discharging position is a position determined in accordance with the print resolution. More specifically, in the shown cases, each box is arranged along the main scanning direction and the sub scanning direction so that a distance between centers of adjacent boxes becomes equal to the distance "d" corresponding to the print resolution.

Further, in each main scanning operation, each of the plurality of ink jet heads 202 discharges the ink droplets toward its corresponding discharging position from each nozzle in the nozzle rows 304. In this case, depending on the arrangement of the plurality of ink jet heads 202, the discharging positions from the respective ink jet heads 202 in a single main scanning operation come to be as shown in the drawing as an example.

More specifically, for example, in the single main scanning operation, the ink jet head 202 for Y color discharges the ink droplets to the discharging positions indicating ink dots 402y in the drawings. In this case, the dots 402y are Y-color ink dots. Further, the dots 402y formed by the single main scanning operation align so that their intervals in the sub scanning direction (X direction) becomes "p", as shown in the drawings, by corresponding to the nozzle pitch "p" (=4d) in one nozzle row 304. Further, in the shown case, the dots 402y align so that their intervals in the main scanning direction (Y direction) become "4d".

Further, similarly, in the single main scanning operation, the ink jet heads 202 respectively for M, C, and K colors discharge the ink droplets to the discharging positions indicating ink dots 402m, 402c, 402k in the drawings. In this case, the dots 402m, 402c, 402k are respectively M-color, C-color, and K-color ink dots. Further, the dots 402m, 402c, 402k are respectively aligned similar to the dots 402y, in a state where their positions are offset from the dots 402y according to how the positions of the nozzle rows 304 in each ink jet head 202 are offset.

In this case, for example, by performing a multi-pass scheme, and sequentially offsetting the positions where the ink dots of the respective colors are to be formed in each main scanning operation, the ink dots of the respective colors can be formed at all of the discharging positions included in a region where printing is to be performed. More specifically, for example, control for one of the ink jet heads 202 is performed similar to the case of using the publicly known head unit 22 (see FIG. 2A), and together with this, a control that adjustment is suitably performed according to how the positions of the nozzle row 304 is offset relative to other ink jet heads 202 can be performed, so that the printing by the multi-pass scheme can suitably be performed. More specifically, for example, the head unit 12 is moved in the sub scanning direction, and similar main scanning operations are performed by the nozzle rows of the respective colors in the head unit 12 at the positions that are respectively offset in the main scanning direction and the sub scanning direction by (1/4) × "p" or an integer multiple thereof. Further, in the shown case, printing is performed by filling all of the respective positions constituting a 4×4 matrix in the drawings by repeating such a main scanning operation for 16 times with a pass number being 16. According to the present embodiment, for example, the two-dimensional image can suitably be printed by the configuration of the three-dimensional object forming device 10.

Further, in the operation shown in FIG. 3B, the ink droplets are discharged by all of the nozzles 302 provided in the head unit 12 such that the intervals in the main scanning direction become equal to the nozzle pitch "p". Further, in this case, the ink dots formed in the same main scanning operation have the minimum interval that is an interval thereof with adjacent ink dots of other colors in an oblique direction. In this case, the oblique direction is, for example, an oblique direction that forms an angle of 45 degrees relative to the X direction and the Y direction. Further, more specifically, in the shown cases, the interval in the oblique direction becomes

$$\sqrt{2} \times (1/4) \times \text{"p"}.$$

Further, in this case, in a range of distance that is proximal in the main scanning direction, for each ink dot, no ink dots of other colors are formed in the same main scanning operation. Due to this, by configuring as above, for example, a coupling of the ink dots in the main scanning direction can suitably be prevented from occurring. Further, in the case of printing by performing the main scanning operations, the coupling of the ink dots in the main scanning direction especially gives rise to uneven streaks and the like. Due to this, the configuration of the present embodiment can for example be said as being a configuration in which the uneven streaks and the like are less likely to occur. Further, in a case of configuring as above, the ink coupling can suitably be prevented not only in the main scanning direction, but also in the sub scanning direction. Due to this, according to the present embodiment, for example, a higher quality printing can be performed for the printing of a two-dimensional image.

It should be noted that in FIGS. 2A, 2B and FIGS. 3A, 3B, the description was given of a case of using only the ink jet heads 202 for the four colors, namely YMCK for the convenience of description. However, to perform even more precise printing, for example, an ink jet head for lighter tone ink may further be used for at least one of the colors. For example, for each of MC, MCK, or YMCK, the lighter tone ink jet heads may further be used, so that the number of colors of the ink used in the head unit 12 may be increased to more than four colors.

Further, in this case, as for the ink jet head for the lighter tone color, it may be arranged so as to have its position in the sub scanning direction aligned with that of the corresponding darker tone ink jet head. By configuring as above, for example, the nozzles for the lighter tones and the nozzles for the darker tones can be arranged to align in one line. Further, according to this, printing using the darker and lighter-toned ink can suitably be performed by using similar configuration as the conventional one.

Further, as for the ink jet heads for the lighter-toned ink, they may be arranged by offsetting their positions in the sub scanning direction relative to other ink jet heads, similar to the arrangements of the plurality of ink jet heads for the different colors. In this case, for example, by assuming that it has a configuration in which the number N of the ink jet heads has been increased, a cycle by which the ink dots of the same color are aligned in FIG. 3B and a number of repetitions of the operation may suitably be increased. By configuring as above also, for example, the printing using the darker and lighter-toned ink can suitably be performed. Further, as needed, for example, an ink jet head for clear ink, or an ink jet head for white ink and the like may further be used.

Further, in the foregoing description, as shown for example in FIG. 2B, the case where the offset amount of the positions of the nozzles between adjacent nozzle rows is "d" has primarily been described. However, for example, an order by which the ink jet heads 202 of the respective colors are aligned may be changed and the like, with respect to the configuration of FIG. 2B. More specifically, for example, the position of the ink jet head 202 for M color and the position of the ink jet head 202 for C color may be switched, and the arrangement of the nozzle rows may accordingly be changed and the like. By configuring as above, for example, upon color printing, a dot arrangement between colors can be made discrete in a greater degree. Further, according to this, dot coupling becomes less likely to occur, so that the uneven streaks and the like can more easily be suppressed.

Next, the operation to form a three-dimensional object in the present embodiment will be described in further detail. Firstly, for the convenience of description, the operation of forming a three-dimensional object using the conventional head unit 22 will be described.

FIGS. 4A and 4B are diagrams showing an example of the operation to form a three-dimensional object using the conventional head unit 22. FIG. 4A is a diagram that shows an example of a configuration of the head unit 22, and shows an example of the configuration of the head unit 22 in a state where a switch to forming ink has been performed.

In the case of forming a three-dimensional object using the conventional head unit 22, the ink used in the plurality of ink jet heads 202 of the head unit 22 is switched from the ink for printing to the forming ink. More specifically, for example, the ink in the plurality of ink jet heads 202 that were used for the ink of the respective colors of YMCK for the case of printing a two-dimensional image is switched to the forming ink. The forming ink may for example be ink dedicated to formation ("MO" ink). Further, as such a forming ink, ink of a predetermined color, such as white, clear and the like, may be used. According to this, upon the main scanning operation, the head unit 22 discharges ink droplets of the forming ink from the plurality of nozzle rows.

As described in connection to FIG. 2A, in the conventional head unit 22, the plurality of ink jet heads 202 are arranged by having their positions in the sub scanning direction to be aligned. Further, in each ink jet head 202, the nozzles are arranged at a constant nozzle pitch "p". Due to this, the ink dots formed in a single main scanning operation are formed by being separated with respect to their adjacent ink dots in the sub scanning direction at least by a distance corresponding to the nozzle pitch "p" in the sub scanning direction.

Further, in the case of the configuration that performs printing by the multi-pass scheme upon printing a two-dimensional image, the nozzle pitch "p" is normally larger than the distance "d" corresponding to the resolution for printing. Further, a size (diameter) of the respective ink dots formed in the main scanning operation is normally set to be larger than the distance "d" corresponding to the resolution for printing, and smaller than the nozzle pitch "p". More specifically, the size of the ink dots is set for example to about 1.8 times the distance "d" corresponding to the resolution. Due to this, the ink dots formed in a single main scanning operation are formed by being separated from other dots in the sub scanning direction.

Further, in the case of printing a two-dimensional image, the ink droplets are discharged at concentrations corresponding to the colors of the respective pixels in the image to be printed by the plurality of ink jet heads 202. Further, in this case, aside from a case where daubing by a specific color is to be performed, printing is not performed for one color of ink at 100% concentration. In this case, printing at 100% concentration is, for example, to discharge the ink droplets to all of the discharging positions set according to the resolution in a certain area.

Contrary to this, in the case of forming a three-dimensional object, upon the formation of the ink layers 52 (see FIGS. 1A and 1B) respectively configuring the three-dimensional object 50, normally the forming ink is discharged at 100% concentration. In this case, discharging the forming ink at 100% concentration is, for example, to discharge the ink droplets of the forming ink so that a total of concentration by the plurality of ink jet heads 202 becomes 100%.

Further, in the case of forming the three-dimensional object using the conventional head unit 22, if the forming ink is discharged by the highest concentration in each main scanning operation by the plurality of ink jet heads 202, the ink droplets are discharged to all of the discharging positions aligned in the main scanning direction. Further, in this case, the ink dots formed in the single main scanning operation are adjacent each other in the main scanning direction by being separated by the distance corresponding to the resolution. Further, the resolution upon the formation is same as the resolution of printing, for example. Due to this, in this case, the size of the ink dots becomes larger than the distance between adjacent dots in the main scanning direction. Further, as a result, the ink dots formed in each main scanning operation become coupled to their adjacent ink dots in the main scanning direction.

FIG. 4B shows an example of a state after a single main scanning operation has been performed using the conventional head unit 22. As described above, in the arrangement of the ink dots formed in the single main scanning operation, the intervals thereof in the sub scanning direction are of the distance corresponding to the nozzle pitch "p". Further, the ink dots are coupled in the main scanning direction. Due to this, the state after a single main scanning operation has been performed comes to be of a state in which a plurality of lines 404 extending respectively in the main scanning direction as shown in the drawings align at constant intervals "p" in the sub scanning direction.

Here, in the case of forming a three-dimensional object using the head unit 22, the multi-pass scheme formation is inevitably performed due to the configuration of the head unit 12. Further, more specifically, the head unit 22 forms one ink layer 52 by forming the plurality of lines 404 while sequentially offsetting the positions in the sub scanning direction, for example, in each main scanning operation.

However, in this case, in the ink layer 52 to be formed, the state of each line 404 becomes more easily reflected. Further, as a result, the uneven streaks and the like corresponding to each line 404 becomes more likely to occur in the ink layer 52. Due to this, in the case of performing the formation using the conventional head unit 22 by the multi-pass scheme, there is a risk of quality deterioration of the three-dimensional object 50 to be formed.

Contrary to this, in the case of using the head unit 12 of the present embodiment, the occurrence of the uneven streaks and the like as above can suitably be suppressed. Thus, next, the operation to form a three-dimensional object using the head unit 12 will be described in further detail.

FIGS. 5A and 5B are diagrams showing an example of the operation to form a three-dimensional object using the using the head unit 12 of the present embodiment. FIG. 5A is a diagram that shows an example of a configuration of the head unit 12, and shows an example of the configuration of the head unit 12 in a state where the switch to the forming ink has been performed. FIG. 5B shows an example of a state after a single main scanning operation has been performed using the head unit 12.

In the example shown in FIGS. 5A and 5B, the three-dimensional object forming device 10 (see FIGS. 1A and 1B) performs the formation in the multi-pass scheme. In this case, the formation in the multi-pass scheme is, for example, a scheme that discharges the ink droplets by a plurality of times of main scanning operations to all of the positions where the ink droplets should be discharged to form one ink layer 52 (see FIGS. 1A and 1B).

More specifically, in this case, the head unit 12 discharges the ink droplets from the respective nozzles to the discharging positions that are the same as upon the printing described using FIG. 3B, in each main scanning operation, by using the plurality of ink jet heads 202 in which the ink to be used is switched to the forming ink. In this case, the head unit 12 discharges the ink droplets of the forming ink from the plurality of nozzle rows in each of the plurality of times of main scanning operations. Further, according to this, one ink layer 52 is formed by the plurality of times of main scanning operations. By configuring as above, for example, the ink layers can be formed suitably at high accuracy.

Further, in this case, for example, since the adjacent ink dots will not be coupled in the main scanning direction, the formation of the lines 404 (see FIGS. 4A and 4B) in which the ink dots are coupled in the main scanning direction can suitably be prevented. Due to this, according to the present embodiment, for example, the occurrence of the uneven streaks and the like can suitably be prevented. Further, for example, the ink layers 52 can more suitably be flattened.

Further, in the case of using the head unit 12 of the present embodiment, a three-dimensional object may be formed by a one-pass operation that forms one ink layer 52 by one pass, instead of the multi-pass scheme. Further, according to this, the formation of a three-dimensional object can be performed faster. Further, each ink layer 52 can be made even flatter. Thus, hereinbelow, the operation of the one-pass formation will be described in further detail.

FIGS. 6A and 6B are diagrams showing another example of the operation to form a three-dimensional object using the head unit 12 of the present embodiment, and showing an example of the operation for the case of performing the one-pass formation. FIG. 6A is a diagram that shows an example of a configuration of the head unit 12, and shows an example of the configuration of the head unit 12 in the state where the switch to the forming ink has been performed. FIG. 6B shows an example of the state after a single main scanning operation has been performed using the head unit 12.

Similar to the case described using FIGS. 5A and 5B, also in the case of performing the one-pass formation, the forming ink is used in the plurality of ink jet heads 202. Further, in this case, when the plurality of nozzle rows provided in the plurality of ink jet heads 202 are seen collectively, it can be considered as being a configuration in which the nozzles are arranged in the sub scanning direction at the intervals "d" corresponding to the resolution of the formation. Further, if this configuration is described in a more generalized term, when the nozzle pitch for one nozzle row is assumed as "p", and the number of the nozzle rows is assume as N pieces, it can be said as being the configuration in which the resolution in the sub scanning direction becomes a resolution corresponding to a distance "p/N" when the plurality of nozzle rows are collectively seen.

Further, when the one-pass formation is to be performed, the plurality of nozzle rows having such a configuration are used, and one ink layer 52 (see FIGS. 1A and 1B) is formed by discharging the ink droplets from the plurality of nozzle rows in a single main scanning operation. By configuring as above, for example, the ink layer 52 can be formed in one-pass operation at higher resolutions corresponding to narrower distances than the nozzle pitch "p" in one nozzle row. Further, according to this, the formation of a three-dimensional object can be performed faster at higher accuracy.

Here, as described above, in the case of forming a three-dimensional object, upon the formation of the ink layers 52 respectively configuring the three-dimensional object 50, normally the forming ink is discharged at 100% concentration. Due to this, in the case of performing the one-pass formation, the ink droplets are discharged so that the concentration of the discharge by the plurality of nozzle rows totals to 100% by the single main scanning operation for the area where the layer 52 is to be formed. Further, in this case, more specifically for example, the nozzles in the plurality of nozzle rows discharge the ink droplets to positions different from each other in the single main scanning operation. Further, the ink droplets are discharged by the plurality of nozzle rows to all of the positions where the ink droplets should be discharged to form one ink layer 52 at least in a certain area that has been set in advance. By configuring as above, the one ink layer 52 can suitably be formed by one pass.

It should be noted that all of the positions where the ink droplets should be discharged is, for example, all of positions determined according to the resolution of the formation. Further, the certain area that has been set in advance is, for example, an area set according to a shape of the three-dimensional object to be formed. This area may for example be an area where an island-shaped ink layer 52 (layered island) is to be formed.

Further, in the respective drawings of the present application, the ink dots 402 formed in the main scanning operation are depicted smaller than the boxes indicating the discharging positions, for the convenience of description. However, in an actual configuration, the size (diameter) of the ink dots 402 normally is sufficiently larger than the distance "d" corresponding to the resolution of the formation. Due to this, in a single main scanning operation, if the formation is performed by arranging the plurality of ink dots 402 at the adjacent discharging positions in the main scanning direction as well as in the sub scanning direction, such dots 402 would be coupled before being cured.

Further, in the case of performing the one-pass formation as shown in FIGS. 6A and 6B, for example, since the ink dots 402 are formed at all of the discharging positions in the certain area, a configuration is obtained in which the ink dots 402 are aligned at the intervals of the distance "d" (= 1/4 × "p") corresponding to the resolution of the formation in both the main scanning direction and the sub scanning direction as shown in FIG. 6B. Further, in the case where the size of the ink dots 402 is larger than the distance "d" corresponding to the resolution, if the ink dots 402 are formed by being finely arranged as above in the single main scanning operation, couplings of the ink dots 402 are generated in both the main scanning direction and the sub scanning direction.

Further, in this case, since the dots 402 are coupled in a planar shape along the ink layer 52, no lines in a certain direction would not occur by the coupling. Further, more specifically, in this case, the ink dots 402 in a liquid state are coupled for the respective positions in one ink layer 52, so the ultraviolet light is delivered after having flattened, and the ink is thereby cured. Due to this, by configuring as above, for example, a uniform layer-like ink layer 52 that is very flat and does not have the occurrence of uneven streaks and the like can suitably be formed.

Here, the formation of a three-dimensional object by the additive manufacturing method is performed by forming the overlapped ink layers 52 by repeating the operation to form the ink layer 52 in the area having a certain area size, for example. Further, in this case, each ink layer 52 is desirably flat as possible both in the main scanning direction and the sub scanning direction. With respect to this, in a case of forming the ink layers 52 as above, the ink layers 52 with the high flatness in both the main scanning direction and the sub scanning direction can suitably be formed. Due to this, by configuring as above, for example, a three-dimensional object can more suitably be formed at high accuracy.

Further, by configuring as above, since each ink layer 52 can be formed by a single main scanning operation, time required for the formation of a three-dimensional object can be shortened. Due to this, by configuring as above, the ink layers 52 can for example be flattened, evened, and sped up suitably with good balance upon the formation of a three-dimensional object.

As above, according to the present embodiment, a three-dimensional object forming device having the configuration more suitable for the operation of forming a three-dimensional object can for example be provided suitably. Further, as described by using FIGS. 2A, 2B and FIGS. 3A, 3B, and the like, the three-dimensional object forming device 10 of the present embodiment can suitably be used also as a printing device for printing a two-dimensional image (ink jet printer) as needed. Further, according to this, a device that can serve two functions, namely of a three-dimensional object forming device and a printing device, can suitably be provided.

Next, supplemental description will be given on the configuration of the three-dimensional object forming device 10 of the present embodiment, and possible modification and the like. As described above, the ink used in the respective ink jet heads 202 in the three-dimensional object forming device 10 may for example be switched suitably according to modes of operation. For example, as described by using FIGS. 5A, 5B and FIGS. 6A, 6B, the forming ink is used as the ink for the respective ink jet heads 202 when the formation of a three-dimensional object is to be performed by the three-dimensional object forming device 10.

Further, as to the three-dimensional object forming device 10, if it is to be operated as the printing device for printing a two-dimensional image, for example, the ink used in the plurality of ink jet heads 202 is switched from the forming ink to the ink for printing before using it as a printing device. In this case, as shown in FIGS. 2A, 2B and FIGS. 3A, 3B, the ink of respective colors of YMCK is used as the ink for the respective ink jet heads 202.

Further, as described using FIGS. 6A, 6B, in the case of forming a three-dimensional object by the three-dimensional object forming device 10 of the present embodiment, the ink layers 52 can be flattened, evened, and sped up suitably with good balance by performing the one-pass formation. However, in a case of printing a two-dimensional image using ink of a plurality of colors that differ from each other, one-pass printing would give rise to more frequent occurrence of inter-color smearing and the like, and there is a risk of not being able to perform suitable printing. Due to this, even in the case of performing the formation of a three-dimensional object in one pass, it is preferable that the printing is performed in the multi-pass scheme upon operating as a printing device, and the ink is cured in each pass. By configuring as above, for example, smearing and the like is prevented from occurring upon printing, and the ink layer 52 flattened to mitigate surface roughness is laminated upon the formation of a three-dimensional object, whereby a neat and pretty three-dimensional object can suitably be formed. Further, by performing the one-pass formation, the forming speed can suitably be made faster. Due to this, by configuring as above, for example, one device can more suitably perform the formation of a three-dimensional object and the printing of a two-dimensional image.

Further, in FIGS. 5A, 5B and FIGS. 6A, 6B, the description was given of the configuration that discharges the ink droplets of the same forming ink from all of the ink jet heads in the head unit 12. However, in a modification of the configuration of the head unit 12, ink droplets of ink other than that for the formation may be discharged from nozzle rows of some of the ink jet heads in the head unit 12. For example, upon the formation of a three-dimensional object, if a support layer for supporting a periphery of the three-dimensional object 50 is to be formed, the head unit 12 may further include ink jet heads for discharging ink droplets that are to become a material of the support layer.

Further, as the ink used for the formation or printing, ink other than the ultraviolet curing ink may be used. More specifically, for example, various types of ink that can be formed by layering a plurality of ink layers, such as solvent-diluted UV curing ink (solvent UV ink) that is ultraviolet curing ink diluted by a solvent, latex ink, or colored resin dispersed aqueous ink and the like, may be used.

INDUSTRIAL APPLICABILITY

The present disclosure can for example be suitably used in a three-dimensional object forming device.

**Claims**

1. A three-dimensional object forming device that forms a three-dimensional object by an additive manufacturing method, the three-dimensional object forming device comprising:

    a head unit, including a plurality of nozzle rows that discharge ink droplets in an inkjet scheme; and
    a main scanning drive unit that causes the head unit to perform a main scanning operation of discharging ink droplets while moving in a main scanning direction that is set in advance,
    wherein each of the plurality of nozzle rows is a row along which a plurality of nozzles are aligned in a nozzle row direction that intersects the main scanning direction,
    the plurality of nozzle rows are arranged along the main scanning direction so that at least some of their positions in a perpendicular direction that intersects perpendicularly with the main scanning direction overlap each other, and
    in the perpendicular direction, respective positions of the nozzles in each nozzle row differ from respective positions of the nozzles in other nozzle rows, **characterized in that**
    N pieces of the nozzle rows are included as the plurality of nozzle rows, wherein N is an integer of 2 or more
    in each of the nozzle rows, the plurality of nozzles are arranged so that intervals in the perpendicular direction become constant intervals "p", and
    the plurality of nozzle rows are arranged along the main scanning direction so that an offset size of positions in the perpendicular direction between the adjacent nozzle rows becomes "p/N" for the position of the nozzle at an end in the arrangement of the nozzles in the nozzle row.

2. The three-dimensional object forming device according to claim 1, wherein
   each of the plurality of nozzle rows discharges ink droplets of ultraviolet curing ink that cured by ultraviolet irradiation.

3. The three-dimensional object forming device according to claim 1 or 2, wherein
   in a case of forming the three-dimensional object, one ink layer is formed in a single main scanning operation by discharging the ink droplets from the plurality of nozzle rows.

4. The three-dimensional object forming device according to claim 3, wherein
   in the single main scanning operation, the respective nozzles in the plurality of nozzle rows discharge the ink droplets to positions different from each other, and
   the ink droplets are discharged from the plurality of nozzle rows to all of the positions where the ink droplets is to be discharged for forming the one ink layer at least within a certain area set in advance.

5. The three-dimensional object forming device according to claim 1 or 2, wherein
   in a case of forming the three-dimensional object, one ink layer is formed by discharging the ink droplets from the plurality of nozzle rows in each of a plurality of main scanning operations.

6. The three-dimensional object forming device according to any one of claims 1 to 5, wherein
   the three-dimensional object forming device is configured operable also as a printing device for printing a two-dimensional image, and
   in a case of printing the two-dimensional image, each of the plurality of nozzle rows discharges ink droplets of colored ink of colors different from each other.

7. The three-dimensional object forming device according to claim 6, wherein
   in the case of printing the two-dimensional image, printing is performed in a multi-pass scheme by using the plurality of nozzle rows.

8. A three-dimensional object forming method that forms a three-dimensional object by an additive manufacturing method, the three-dimensional object forming method comprising:

    causing a head unit including a plurality of nozzle rows that discharge ink droplets in an inkjet scheme to perform a main scanning operation of discharging ink droplets while moving in a main scanning direction that is set in advance,
    wherein each of the plurality of nozzle rows is a row along which a plurality of nozzles are aligned in a nozzle row direction that intersects the main scanning direction,

the plurality of nozzle rows are arranged along the main scanning direction so that at least some of their positions in a perpendicular direction that intersects perpendicularly with the main scanning direction overlap each other, and

in the perpendicular direction, respective positions of the nozzles in each of the nozzle rows differ from respective positions of the nozzles in the other nozzle rows, **characterized in that** the method further comprises the steps of:

including N pieces of the nozzle rows as the plurality of nozzle rows, wherein N is an integer of 2 or more

arranging the plurality of nozzles in each of the nozzle rows, so that intervals in the perpendicular direction become constant intervals "p", and

arranging the plurality of nozzle rows along the main scanning direction so that an offset size of positions in the perpendicular direction between the adjacent nozzle rows becomes "p/N" for the position of the nozzle at an end in the arrangement of the nozzles in the nozzle row.

**Patentansprüche**

1. Herstellungsvorrichtung für dreidimensionales Objekt, die ein dreidimensionales Objekt durch das Verfahren der additiven Fertigung herstellt, wobei die Herstellungsvorrichtung für dreidimensionales Objekt Folgendes umfasst:

eine Kopfeinheit, darin eingeschlossen eine Vielzahl von Düsenreihen, die Tintentröpfchen in ein Tintenstrahlsystem abgeben; und

eine hauptsächliche Scan-Antriebseinheit, die verursacht, dass die Kopfeinheit einen hauptsächlichen Scan-Vorgang des Abgebens von Tintentröpfchen durchführt, während sie sich in einer hauptsächlichen Scan-Richtung bewegt, die im Voraus eingestellt ist,

wobei jede der Vielzahl von Düsenreihen eine Reihe ist, entlang der eine Vielzahl von Düsen in einer Düsenreihenrichtung ausgefluchtet ist, die die hauptsächliche Scan-Richtung schneidet,

die Vielzahl von Düsenreihen entlang der hauptsächlichen Scan-Richtung angeordnet ist, so dass mindestens einige ihrer Positionen in einer senkrechten Richtung, die senkrecht die hauptsächliche Scan-Richtung schneidet, einander überlappen, und

in der senkrechten Richtung entsprechende Positionen der Düsen in jeder Düsenreihe von entsprechenden Positionen der Düsen in anderen Düsenreihen verschieden sind, **dadurch gekennzeichnet, dass**

N Teile der Düsenreihen als die Vielzahl von Düsenreihen eingeschlossen sind, wobei N eine ganze Zahl von 2 oder mehr ist,

in jeder der Düsenreihen die Vielzahl von Düsen derart angeordnet ist, dass Intervalle in der senkrechten Richtung konstante Intervalle "p" werden, und

die Vielzahl von Düsenreihen entlang der hauptsächlichen Scan-Richtung derart angeordnet ist, dass eine versetzte Größe von Positionen in der senkrechten Richtung zwischen den benachbarten Düsenreihen "p/N" für die Position der Düse an einem Ende in der Anordnung der Düsen in der Düsenreihe wird.

2. Herstellungsvorrichtung für dreidimensionales Objekt nach Anspruch 1, wobei jede der Vielzahl von Düsenreihen Tintentröpfchen von UV-härtender Tinte abgibt, die durch ultraviolette Strahlung ausgehärtet ist.

3. Herstellungsvorrichtung für dreidimensionales Objekt nach Anspruch 1 oder 2, wobei in einem Fall des Herstellens des dreidimensionalen Objekts eine Tintenschicht in einem einzigen hauptsächlichen Scan-Vorgang durch Abgeben der Tintentröpfchen aus der Vielzahl von Düsenreihen hergestellt wird.

4. Herstellungsvorrichtung für dreidimensionales Objekt nach Anspruch 3, wobei im einzigen hauptsächlichen Scan-Vorgang die entsprechenden Düsen in der Vielzahl von Düsenreihen Tintentröpfchen an verschiedene Positionen abgeben, die voneinander verschieden sind, und die Tintentröpfchen von der Vielzahl von Düsenreihen an alle der Positionen abgegeben werden, an denen die Tintentröpfchen abgegeben werden müssen, um die eine Tintenschicht mindestens innerhalb eines bestimmten Bereichs herzustellen, der im Voraus eingestellt ist.

5. Herstellungsvorrichtung für dreidimensionales Objekt nach Anspruch 1 oder 2, wobei in einem Fall des Herstellens des dreidimensionalen Objekts eine Tintenschicht durch die Abgabe von Tintentröpfchen aus der Vielzahl von Düsenreihen in jeder der Vielzahl von hauptsächlichen Scan-Vorgängen hergestellt ist.

6. Herstellungsvorrichtung für dreidimensionales Objekt nach einem der Ansprüche 1 oder 5, wobei die Herstellungsvorrichtung für dreidimensionales Objekt auch als eine Druckvorrichtung betriebsbereit konfiguriert ist, um ein zweidimensionales Bild zu drucken, und

in einem Fall des Druckens des zweidimensionalen Bilds jede der Vielzahl von Düsenreihen Tintentröpfchen von farbiger Tinte mit voneinander verschiedenen Farben abgibt.

7. Herstellungsvorrichtung für dreidimensionales Objekt nach Anspruch 6, wobei
im Fall des Druckens des zweidimensionalen Bilds das Drucken in einem Multipass-System durch die Verwendung der Vielzahl von Düsenreihen durchgeführt wird.

8. Herstellungsverfahren für dreidimensionales Objekt, die ein dreidimensionales Objekt durch das Verfahren der additiven Fertigung herstellt, wobei die Herstellungsverfahren für dreidimensionales Objekt Folgendes umfasst:

Verursachen, dass eine Kopfeinheit, darin eingeschlossen eine Vielzahl von Düsenreihen, die Tintentröpfchen in ein Tintenstrahlsystem abgeben, einen hauptsächlichen Scan-Vorgang des Abgebens von Tintentröpfchen durchführt, während sie sich in einer hauptsächlichen Scan-Richtung bewegt, die im Voraus eingestellt ist, wobei jede der Vielzahl von Düsenreihen eine Reihe ist, entlang der eine Vielzahl von Düsen in einer Düsenreihenrichtung ausgefluchtet ist, die die hauptsächliche Scan-Richtung schneidet,

die Vielzahl von Düsenreihen entlang der hauptsächlichen Scan-Richtung derart angeordnet ist, dass mindestens einige ihrer Positionen in einer senkrechten Richtung, die senkrecht die hauptsächliche Scan-Richtung schneidet, einander überlappen, und

in der senkrechten Richtung entsprechende Positionen der Düsen in jeder der Düsenreihen von entsprechenden Positionen der Düsen in anderen Düsenreihen verschieden sind, **dadurch gekennzeichnet, dass** das Verfahren weiter die folgenden Schritte umfasst:

Einschließen von N Teilen der Düsenreihen als die Vielzahl von Düsenreihen, wobei N eine ganze Zahl von 2 oder mehr ist,
Anordnen der Vielzahl von Düsen in jeder der Düsenreihen, so dass Intervalle in der senkrechten Richtung konstante Intervalle "p" werden, und
Anordnen der Vielzahl von Düsenreihen entlang der hauptsächlichen Scan-Richtung, so dass eine versetzte Größe von Positionen in der senkrechten Richtung zwischen den benachbarten Düsenreihen "p/N" für die Position der Düse an einem Ende in der Anordnung der Düsen in der Düsenreihe wird.

**Revendications**

1. Dispositif de formation d'objet en trois dimensions qui forme un objet en trois dimensions à l'aide d'un procédé de fabrication additif, le dispositif de formation d'objet en trois dimensions comprenant :

une unité de tête, comprenant une pluralité de rangées de buses qui évacuent des gouttelettes d'encre sous forme de jet d'encre ; et
une unité de balayage principal qui permet à l'unité de tête d'effectuer une opération de balayage principal qui consiste à évacuer des gouttelettes d'encre tout en se déplaçant dans une direction de balayage principal qui est définie à l'avance,
dans lequel chacune de la pluralité de rangées de buses est une rangée le long de laquelle plusieurs buses sont alignées dans une direction de rangée de buses qui croise la direction de balayage principal,
les buses des rangées de buses sont agencées dans la direction de balayage principal de sorte qu'au moins certaines de leurs positions dans une direction perpendiculaire qui croise perpendiculairement la direction de balayage principal se chevauchent, et
dans la direction perpendiculaire, les positions respectives des buses sur chaque rangée de buses diffèrent des positions respectives des buses sur les autres rangées de buses, **caractérisé en ce que**
N buses des rangées de buses sont incluses sous la forme de la pluralité de rangées de buses, où N est un entier égal ou supérieur à 2,
sur chacune des rangées de buses, les buses sont disposées de sorte que les intervalles dans la direction perpendiculaire deviennent des intervalles constants « p », et
les rangées de buses sont disposées dans la direction de balayage principal de sorte qu'un décalage des positions dans la direction perpendiculaire entre les rangées de buses adjacentes devienne « p/N » pour la position de la buse à une extrémité de l'agencement des buses sur la rangée de buses.

2. Dispositif de formation d'objet en trois dimensions selon la revendication 1, dans lequel
chacune de la pluralité de rangées de buses évacue des gouttelettes d'encre à durcissement par UV qui est durcie par un rayonnement ultraviolet.

3. Dispositif de formation d'objet en trois dimensions selon la revendication 1 ou 2, dans lequel en cas de formation de l'objet en trois dimensions, une couche d'encre est formée lors d'une seule opération de balayage principal en évacuant les gouttelettes d'encre depuis la pluralité de rangées de buses.

4. Dispositif de formation d'objet en trois dimensions selon la revendication 3, dans lequel lors de l'opération de balayage principal, les buses respectives de la pluralité de rangées de buses évacuent les gouttelettes d'encre vers des positions différentes les unes des autres, et les gouttelettes d'encre sont évacuées par la pluralité de rangées de buses vers toutes les positions auxquelles les gouttelettes d'encre doivent être évacuées afin de former la couche d'encre au moins dans une certaine zone définie à l'avance.

5. Dispositif de formation d'objet en trois dimensions selon la revendication 1 ou 2, dans lequel en cas de formation de l'objet en trois dimensions, une couche d'encre est formée en évacuant les gouttelettes d'encre depuis la pluralité de rangées de buses lors de chacune d'une pluralité d'opérations de balayage principal.

6. Dispositif de formation d'objet en trois dimensions selon l'une quelconque des revendications 1 à 5, dans lequel le dispositif de formation d'objet en trois dimensions peut également être configuré comme un dispositif d'impression pour imprimer une image en deux dimensions, et en cas d'impression de l'image en deux dimensions, chacune de la pluralité de rangées de buses évacue des gouttelettes d'encre de différentes couleurs.

7. Dispositif de formation d'objet en trois dimensions selon la revendication 6, dans lequel en cas d'impression de l'image en deux dimensions, l'impression est effectuée en plusieurs passages à l'aide de la pluralité de rangées de buses.

8. Procédé de formation d'objet en trois dimensions qui forme un objet en trois dimensions par un procédé de fabrication additif, le procédé de formation d »'objet en trois dimensions comprenant :

le fait de permettre à une unité de tête comprenant une pluralité de rangées de buses qui évacuent des gouttelettes d'encre sous forme de jet d'encre d'effectuer une opération de balayage principal qui consiste à évacuer des gouttelettes d'encre tout en se déplaçant dans une direction de balayage principal qui est définie à l'avance, dans lequel chacune de la pluralité de rangées de buses est une rangée le long de laquelle plusieurs buses sont alignées dans une direction de rangée de buses qui croise la direction de balayage principal, les rangées de buses sont disposées dans la direction de balayage principal de sorte qu'au moins certaines de leurs positions dans une direction perpendiculaire qui croise perpendiculairement la direction de balayage principal se chevauchent, et dans la direction perpendiculaire, les positions respectives des buses sur chacune des rangées de buses diffèrent des positions respectives des buses sur les autres rangées de buses, **caractérisé en ce que** le procédé comprend en outre les étapes consistant à :

inclure N buses des rangées de buses sous la forme de la pluralité de rangées de buses, où N est un entier égal ou supérieur à 2, disposer la pluralité de buses sur chacune des rangées de buses, de sorte que les intervalles dans la direction perpendiculaire deviennent des intervalles constants « p », et disposer la pluralité de rangées de buses dans la direction de balayage principal de sorte qu'un décalage des positions dans la direction perpendiculaire entre les rangées de buses adjacentes devienne « p/N » pour la position de la buse à une extrémité de l'agencement des buses sur la rangée de buses.

FIG. 1A

FIG. 1B

FIG. 2A (RELATED ART)

FIG. 2B

FIG. 3A

FIG. 3B

FIG. 4A (RELATED ART)

FIG. 4B (RELATED ART)

FIG. 5A

FIG. 5B

FIG. 6A

FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009013751 A2